(19) Europäisches Patentamt
European Patent Office
Office européen des brevets

(11) EP 1 562 690 B1

(12) **EUROPEAN PATENT SPECIFICATION**

(45) Date of publication and mention of the grant of the patent:
**13.06.2007 Bulletin 2007/24**

(21) Application number: **03780027.3**

(22) Date of filing: **21.11.2003**

(51) Int Cl.:
***B01D 53/86*** *(2006.01)* ***C08F 6/00*** *(2006.01)*

(86) International application number:
**PCT/EP2003/013123**

(87) International publication number:
**WO 2004/047959 (10.06.2004 Gazette 2004/24)**

(54) **SAFE REMOVAL OF VOLATILE, OXIDIZABLE COMPOUNDS FROM PARTICLES, IN PARTICULAR POLYMER PARTICLES**

SICHERE ENTFERNUNG VON FLÜCHTIGEN, OXIDIERBAREN VERBINDUNGEN AUS PARTIKELN, INSBESONDERE AUS POLYMERPARTIKELN

SUPPRESSION SURE DE COMPOSES VOLATILS OXYDABLES DE PARTICULES, EN PARTICULIER, DE PARTICULES POLYMERES

(84) Designated Contracting States:
**AT BE BG CH CY CZ DE DK EE ES FI FR GB GR HU IE IT LI LU MC NL PT RO SE SI SK TR**

(30) Priority: **22.11.2002 DE 10254807**
**20.12.2002 US 435196 P**

(43) Date of publication of application:
**17.08.2005 Bulletin 2005/33**

(73) Proprietor: **Basell Polyolefine GmbH**
**50389 Wesseling (DE)**

(72) Inventors:
- **MÄHLING, Frank-Olaf**
**68165 Mannheim (DE)**
- **NEUMANN, Erich**
**38126 Braunschweig (DE)**
- **FINETTE, Andre-Armand**
**50997 Köln (DE)**
- **NIEKEN, Ulrich**
**67434 Neustadt a.d.W (DE)**

(56) References cited:
**CA-A- 836 977** **US-A- 3 310 882**
**US-A- 4 372 758** **US-A- 5 376 742**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 562 690 B1

## Description

The present invention relates to a method of safely removing one or more volatile oxidizable compounds which can form an explosive mixture with oxygen from particles present in a container by means of a gas stream, in which an inflowing gas stream is introduced into the container, the gas stream takes up the oxidizable compound from the particles and an outflowing gas stream laden with the oxidizable compound is discharged from the container, and also to an apparatus for implementing the method.

The polymer product formed in polymerizations is normally granulated or pelletized and subsequently temporarily stored in silos before it is passed to further processing. Depending on the polymerization process used, the granulated material contains a more or less high proportion of residual monomers which are given off from the granules during storage in the silo.

To obtain a granulated material which is as free as possible of residual monomer, the silo is usually purged with air so as to drive the residual monomer from the polymer product in a diffusion-controlled process. The monomer which has been driven off is then usually oxidized to $CO_2$ and water by catalytic oxidation or made unharmful in another way.

Purging of the silos with air can result in formation of explosive monomer/air mixtures: the explosive limits for low density polyethylene (LDPE) are 2.7 and 36% by volume of ethylene. For this reason, Beret et al. "Purging criteria for LDPE make bins" Chem. Ing. Progr. 73, 44-49, have therefore developed methods of ensuring safe operation of air-purged silos. To achieve this, they calculate an air stream which is sufficiently large to keep the ethylene content below the explosive limit of 2.7% by volume.

Disadvantages of this method are that complicated regulation and monitoring of the air stream is necessary and that in the event of the explosive limit being exceeded, safety measures have to be activated by flooding the silo with inert gas or water, which in an unfavorable case can lead to shutdown of the entire plant. Furthermore, owing to unfavorable distributions of granulated material in the silo, there is always a risk of local formation of monomer/air mixtures which are above the explosive limit.

As an alternative (see US 4 372 758), the monomer can be stripped from the polymer product by means of an inert gas, e.g. nitrogen, to prevent formation of an explosive mixture. However, nitrogen is relatively expensive compared to air which is available in unlimited quantities, and this is noticeable at, in particular, high throughputs and a high residual monomer content in the polymer.

It is an object of the present invention to overcome the abovementioned disadvantages of the prior art and provide a method and an apparatus which makes it possible for residual monomers to be removed safely and inexpensively from polymer particles, in particular granulated polymers.

We have found that this object is achieved by the method having the features of claim 1 and the apparatus having the features of claim 13. Claims 2 to 12 and 14 to 18 define preferred embodiments of the present Invention.

In the method of removing volatile oxidizable compounds from particles present in a container, a gas stream is continuously introduced into the container, the gas stream takes up the oxidizable compound from the particles in the container and a gas stream laden with the oxidizable compound is discharged from the container. In the method of the present invention, oxygen is added to the gas stream which is discharged and the oxidizable compound present in the discharged gas stream is subsequently at least partly catalytically oxidized by means of the oxygen and this oxidized gas stream forms at least part of the gas stream fed in, so that the gas stream is circulated.

It is important that the oxygen is added only after the container and the oxidizable compound is partly consumed in the catalytic oxidation. In this way, at least part of the oxidizable compound is made unharmful and the gas stream returned to the silo contains only inert gases or at most nonhazardous amounts of oxygen. As a result, the amount of the gas passed through the container depends only on the need to achieve the desired removal of oxidizable compounds from the particles in the prescribed time and no longer on the need to adhere to limits for the ethylene content, while at the same time avoiding the formation of an explosive mixture in the container.

This enables, firstly, explosion protection for the silo to be omitted or at least reduced as long as it is ensured that the plant is immediately shut down if the oxidation catalyst falls or in the event of other malfunctions. In particular, it is possible in the case of a malfunction to omit flooding of the entire container with nitrogen or water to make it inert, since an inert or at least nonexplosive atmosphere is already present in it at all times. Secondly, air can be used as cheap purge gas since the oxygen present in it is removed by reaction with the oxidizable compound before it enters the container.

The volatile oxidizable compound can be any organic compound which has a vapor pressure sufficiently high to enable removal by means of a purge gas. The method is preferably applied to compounds which have a sufficient vapor pressure even at room temperature, although it may also be possible to bring the container or the gas stream to an elevated temperature in order to ensure a sufficient vapor pressure, which should preferably not be below $10^4$ Pa. Parallel removal of various oxidizable compounds is also conceivable in principle, as long as either the vapor pressure of the compounds is of the same order of magnitude or the removal is carried out in a two-stage process in which the

more volatile component is removed first and the further components are subsequently removed at a higher temperature. Preferred temperatures in the implementation of the method are in the range from room temperature to a temperature which is significantly below the softening point of the particles, since otherwise there is a risk of the particles caking. The lower limit to the temperature is imposed only by the need for the oxidizable compound to have a sufficient vapor pressure. Particular preference is given to temperatures of from 30 to 100°C, in particular from 40 to 80°C, for the method.

Preferred organic compounds are residual monomers and/or solvents which remain In the polymer particles from the preparation of polymers. Particularly important compounds of this type are olefins such as ethylene, propylene and 1-butene, 1-pentene or 1-hexene which firstly have a particularly high vapor pressure and can thus easily be stripped from the corresponding polymer particles and secondly can easily be oxidized to carbon dioxide and water. The removal of mixtures of these olefins is likewise preferred. The process is also particularly useful for removing substances which are required for carrying out the polymerization reaction. Examples are the particularly preferred aliphatic hydrocarbons methane, ethane, propane, butane, pentane and hexane and also other volatile solvents, auxiliaries and the like, without the method being restricted thereto. Further readily oxidizable compounds whose removal is particularly preferred are styrene and other aromatic hydrocarbons. Partially oxidized hydrocarbons such as alcohols, aldehydes, carboxylic acids and ethers are also possibilities, as long as they have a sufficiently high vapor pressure. Removal of the partially oxidized compounds corresponding to the abovementioned hydrocarbons is preferred.

Among inorganic substances, ammonia is of particular Importance, although in this case selective oxidation to nitrogen or reduction of the nitrogen oxides formed, for example by means of a three-way catalyst, has to be ensured.

For the purposes of the present invention, the term "particles" encompasses all agglomerates in the condensed state. These can be, in particular, solids which are preferably present in the form of granules, powders, coarse powders or lumps, or droplets of liquid or wax as are formed, for example, in spraying towers. The method is preferably used for degassing particles of granulated materials having a diameter of from 1 to 10 mm, particularly preferably from 2 to 6 mm, very particularly preferably from 3 to 5 mm, since in this case the pressure drop experienced by the gas flowing through the container is low but at the same time there is a sufficient surface area available for removal of the oxidizable compound.

In a further, preferred embodiment of the invention, the particles are polymer particles. Particular preference is given to the polymer particles being polymer granules. Particular preference is likewise given to application of the method to sprayed liquid or wax-like polymer particles, for example in a wax spraying plant in which large amounts of nitrogen are required for spraying the wax from a nozzle and large amounts of air are needed for cooling the wax particles. During cooling of the wax particles, the air takes up residual monomers from the wax particles which have to be made unharmful to the environment. When the method of the present invention is employed, the air in the spray tower is replaced by oxygen-free or oxygen-reduced gas mixtures, thus likewise preventing the formation of explosive mixtures.

The polymer particles used according to the present invention include, in particular, granules of polyolefins having the structure

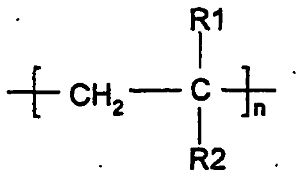

where R1 and R2 are each hydrogen, a straight-chain or branched saturated aliphatic radical having 1 to 6 carbon atoms or a cycloaliphatic group. They also include granulated, materials comprising polyolefin copolymers. Preferred polyolefins are polyethylene (PE), polypropylene (PP), poly(1-butene) (PB), polyisobutene and poly(4-methyl-1-pentene) and also copolymers of ethylene and propylene, (i.e. random copolymers and polyolefin rubbers), terpolymers of ethylene, propylene and hydrocarbons containing two or more nonconjugated double bonds (i.e. polyolefin elastomers) and blends of PP, rubber and PE, in particular those which are produced in situ (C2/C3 reactor blends). Further possible copolymers are copolymers of ethylene with acrylates and methacrylates.

Furthermore, the radicals R1 and/or R2 may also contain aryl or arylalkyl groups. Particularly useful polymers of this type are polystyrene and copolymers of styrene with other monomers of the abovementioned type. The method is also particularly useful for polyesters, polyethers and other oxygen-containing polymers, since the monomers used can likewise be oxidized completely to carbon dioxide and water, and also for all other polymers which, after their preparation, contain either solvent and/or monomer residues which meet the abovementioned criteria. In the case of hydrolysis-sensitive polymers and polycondensates, the removal of the monomers and/or solvents can also be combined with drying of the particles, as is described, for example, in DE 44 36 046 A1.

Depending on the purpose to which they are to be put, the granulated polymers may further comprise additives,

for example stabilizers, plasticizers, colorants, light stabilizers, flame retardants, antioxidants or nucleating agents, and/or fillers.

In the case of polymer particles, the method of the present invention can be utilized not only for removing the monomers and/or solvents but also for deodorizing the particles. For example, the air can be replaced by steam so that steam extraction of the odor-imparting substances occurs.

It is particularly advantageous for the added oxygen to be added in a stoichiometric amount based on the complete oxidation of the oxidizable compound. In this way, the oxidizable compound is firstly converted virtually completely into noncombustible and preferably also nonhazardous oxidation products such as $CO_2$ and water and virtually complete degassing is achieved. Secondly, the added oxygen is also consumed completely and the formation of an explosive mixture is ruled out. Small excesses of oxygen can also be used to achieve complete oxidation, as long as it is ensured that the oxygen does not accumulate in the circuit over time and the concentration of oxygen in the container does not rise above the explosive limit of about 7% by volume. Preference is given to the proportion of oxygen in the container being from 0.1 to 5% by volume, more preferably from 0.5 to 4% by volume, particularly preferably from 1 to 3% by volume.

The use of air as oxygen source is particularly inexpensive and simple and is therefore particularly preferred. In a further, preferred variant of the invention, the amount of added oxygen can be regulated on the basis of the content of oxygen and/or the oxidizable compound measured in the oxidized gas outflow stream, i.e. after passage through the catalyst

A further prerequisite is that catalytic oxidation of the oxidizable compound is possible, i.e. that suitable catalysts for the oxidation are available. Possible oxidation catalysts are, in particular, noble metal catalysts and metal oxide catalysts which are suitable for a broad range of organic compounds. These can be present, for example, in the form of monolithic catalysts, as beds of catalyst particles or as plates, without the method of the present invention being restricted thereto. As noble metal catalysts, in particular for the oxidation of hydrocarbons, preference is given to those whose active component comprises platinum, palladium or rhodium, either in pure or mixed form. If possible, the oxidizable compounds should be oxidized to compounds which do not pose a danger to the environment. The catalyst system selected, or the use of a combination of various catalysts, has to be matched to the particular conditions. Furthermore, the gas stream discharged must contain no catalyst poisons (e.g. sulfur compounds).

In a preferred variant, the particles are continuously introduced into and discharged from the container, with the gas stream being conveyed in countercurrent to the particles.

Since both the container and the lines only become completely free of oxygen after the catalytic oxidation of the recirculated gas has been running for a prolonged period if oxygen-containing gas, in particular air, is present in the system, provision of a preceding start-up phase in which the circuit is purged with an inert gas, in particular nitrogen, is preferred. The degassing plant then has a nonexplosive oxygen content from the beginning and maintains this according to the present invention. In a further, preferred variant, after the plant has been made inert, the oxygen content in the container is continuously increased during the start-up phase to the prescribed level of preferably from 0.1 to 5% by volume and is subsequently kept constant.

A further aspect of the present invention is a degassing plant for implementing the above-described method. This comprises, as significant components, a container, a catalyst unit, a gas circuit and a gas metering unit.

The container which serves to accommodate the polymer particles is provided with a gas inlet and a gas outlet In the simplest case, the container is a silo for the storage of granulated polymers. Such silos are generally used to temporarily store the freshly produced granulated polymer before it is transported further or packed. The use of silos for degassing granulated polymers has been known per se and customary for a long time. In addition, other types of containers such as extraction columns, flow tubes, filter screens, stirred vessels or fluidized-bed reactors are in principle also possible for the method of the present invention.

In a preferred arrangement, the polymer particle outlet and the gas inlet are located on one side of the container, particularly preferably on the underside, and the polymer particle inlet together with the gas outlet is located on an opposite side of the container, particularly preferably on the upper side. When the degassing plant is in operation, the gas stream thus flows in countercurrent to the polymer particles, so that the freshly introduced gas stream which is free of oxidizable compound comes into contact with virtually degassed particles and a low residual content of oxidizable compound remains in the particles.

The catalyst unit employed according to the present invention contains an oxidation catalyst for the oxidation of the residual monomer carried from the container by the outflowing gas stream by means of oxygen. The oxidation catalyst preferably comprises a bundle of conventional monolithic three-way or oxidation catalysts for automobile exhaust gas purification. In a particularly preferred embodiment, the catalyst unit is operated autothermally. The gas outlet of the container is connected via the gas outlet line to the catalyst unit, while the catalyst unit is in turn connected via a return line to the gas inlet of the container, so that the gas stream can be circulated. The introduction of the oxygen required for the oxidation of the oxidizable compound in the gas outlet stream is effected by means of an air metering unit which is located in the gas outlet line.

A lambda probe for measuring the oxygen content is preferably provided in the return line to measure the oxygen content of the oxidized gas stream. A regulating unit regulates the amount of oxygen introduced via the metering unit as a function of the oxygen content measured by means of the lambda probe.

The method of the present invention and the apparatus are explained below for the removal of ethylene from granulated low density polyethylene (LDPE) with the aid of the figure, without the invention being restricted to the embodiment described. It must be emphasized that the method is restricted neither to polyethylene nor polymers in, general but is generally suitable for the removal of volatile combustible substances.

The figure shows a flow diagram of an apparatus for removing ethylene from polymer particles in the form of a granulated material 2. Here, it is immaterial by which polymerization process and by which granulation technique the granulated material has been obtained. The method is suitable for all customary polymerization processes, regardless of whether the polymerization has been carried out in the gas phase using a fluidized bed, in solution (bulk) or in a dispersion (sluny), since all these processes produce a granulated material which contains more or less large amounts of ethylene or solvent residues which have to be removed before further processing or dispatch. Likewise, the type of polymerization catalyst used; regardless of whether this is a Ziegler-Natta, chromium or metallocene catalyst, or the initiator in the case of free-radical polymerization has little or no influence on the method.

The method of the present invention can be applied to granulated material which has been obtained by cold granulation or by hot granulation. The shape of the granules also plays a minor role and likewise has little influence on the pressure drop in the container and the degassing kinetics.

The apparatus comprises a silo 1 of conventional construction, as is customarily employed for the storage of granulated materials 2. The granulated material 2 is fed in at the top of the silo 1 via a polymer inlet 7 and leaves the silo 1 at the bottom via a polymer outlet 8. The granulated material 2 introduced into the silo normally has an ethylene content of from 0.1 to 1% by weight, but the method is in principle not restricted to a particular ethylene content because of the inert atmosphere in the silo 1, so that it is in principle also possible to degas granulated material having higher or lower ethylene contents. The granulated material is usually introduced and discharged continuously at the rate at which it is supplied by an upstream polymerization plant, but batchwise operation is likewise possible. The granulated material 2 is conveyed from the respective production plant via the line 13 to the silo 1. The degassed granulated material is discharged from the silo 1 via the line 14 and passed, as desired, to packaging, dispatch or storage facilities.

Furthermore, the silo 1 has a gas inlet 3 on the underside and a gas outlet 4 at the top of the silo 1 via which the gas stream is introduced into the silo and discharged from the silo 1. in operation, the gas stream flows through the silo 1 containing the granulated material 2 and during its passage takes up ethylene. The location of the granulated material inlet 7 and the gas outlet 4 on the top of the silo and the granulated material outlet 8 and the gas inlet 3 on the underside of the silo 1 ensures countercurrent degassing and thus substantial removal of the residual monomer from the granulated material 2.

The maximum ethylene concentration established at equilibrium can be calculated according to Henry's law. Since diffusion from the granulated material also plays a significant role, the ethylene concentration established in the silo 1 can, depending on the conditions, be considerably below the equilibrium concentration. The design of a degassing plant, in particular the residence time of the granulated material necessary for sufficient removal of the ethylene and the necessary gas flows, is generally known to those skilled in the art. In this context, particular mention should be made of the studies in Beret et al. "Purging criteria for LDPE make bins" Chem. Ing. Progr. 73, 44-49, and the literature cited therein. The gas flows should be selected so that the pressure drop in the silo is not more than $10^4$ Pa, preferably below $5\times10^3$ Pa, to make economical operation possible. The operating conditions for the catalyst always have to be taken into account, too (see below). The preferred average degassing times range from a few hours to a number of days.

The gas stream fed continuously to the silo 1 via the gas return line 10 consists essentially of only nitrogen and carbon dioxide and in the ideal case consists only of recirculated gas containing very little, if any, ethylene, as will be explained in more detail below. In particular, the gas stream in the silo contains no oxygen or only traces of oxygen, so that no explosion protection has to be provided in the silo 1, and the formation of an explosive mixture with oxygen is ruled out in the silo 1 even in the event of an operating malfunction.

The ethylene-enriched gas stream discharged from the silo 1 is conveyed by means of the gas outlet line 9 to a catalyst unit 5. The catalyst unit 5 consists essentially of an oxidation catalyst for oxidizing the ethylene present in the outflowing gas to carbon dioxide and water according to the equation

$$C_2H_4 + 3\ O_2 \rightarrow 2\ CO_2 + 2\ H_2O.$$

Customary catalysts for exhaust gas purification in automobiles, which consist essentially of a honeycomb support coated with a noble metal such as platinum, palladium or rhodium, are preferably used for this purpose. Suitable catalysts include both pure oxidation catalysts, usually having platinum and palladium as active components, and 3-way catalysts based on platinum and rhodium. However, it is also possible to use other catalyst systems which are employed for industrial waste gas purification by total oxidation (catalytic afterbuming). The oxidation of ethylene and other monomers based on hydrocarbons over noble metal surfaces or metal oxides is generally known and described, for example, in VDI Berichte 1034 (1993) 123-138. The operating range of such a noble metal catalyst is from about 180 to 600°C, with peaks up to 950°C. The minimum reaction temperature to achieve virtually100% conversion depends on the substance to be oxidized and in the case of ethylene is 280°C. For comparison, propylene requires only 210°C and aliphatic hydrocarbons such as pentane require a temperature as high as 350°C. Further examples of applications for the method of the present invention may be taken from VDI Bericht No. 1034 (1993) 130-132.

The temperature increase in the catalyst can, assuming adiabatic temperature conditions, be calculated by means of the equation

$$\Delta T_{ad} = \frac{\Delta H_r \cdot}{\rho_G \cdot c_p^G} c(C_2H_4)$$

where

$\Delta H_r$ = 50305 kJ/kg (reaction enthalpy of the oxidation reaction),
$C_p^G$ = 1 kJ/kg K (heat capacity of the gas),
$\rho^G$ = 1.2 kg/m$^3$ (density of the gas) and
$c(C_2H_4)$ = concentration of ethylene in the offgas stream, in kg/m$^3$

Here, $C_p^G$ and $\rho^G$ can, as an approximation, be assumed to be independent of the gas composition and the temperature. For total oxidation of low ethylene concentrations, this gives a temperature increase as a function of the ethylene loading of the gas stream of about 41921 K·$c(C_2H_4)$/(kg/m$^3$).

Since the maximum working temperature of a noble metal catalyst of about 600°C should not be exceeded for a prolonged period, it has to be ensured that the proportion of ethylene In the gas stream does not significantly exceed a value of about 1% by weight without additional measures. To enable higher ethylene loadings to be dealt with as well, the temperature increase can be lowered by providing the catalyst unit 5 with a further circuit 15 via which the oxidized gas stream can if necessary be recirculated in order to reduce the concentration of ethylene in the catalyst unit 5. In any case, heating of the catalyst above 950°C has to be avoided since otherwise there is a risk of irreversible damage.

The inlet temperature of about 280°C necessary for operation of the catalyst to oxidize ethylene can be achieved by the use of an air preheater or heat exchanger. This is appropriate if the loading of the gas stream is high and leads to an adiabatic temperature increase of more than 250°C. Since the oxidized gas stream has to be cooled to temperatures significantly below the softening point of the granulated material before it is returned to the silo, it is advantageous to utilize the heat recovered during cooling for preheating the gas stream fed to the catalyst unit 5. Alternatively, in the case of adiabatic temperature increases of less than 200°C, the catalyst unit 5 can also be operated autothermally by using the outflowing oxidized gas stream for heating the inflowing gas stream by means of a catalyst bed with flow reversal. The design of an autothermally operated catalyst unit 5 is also generally known to those skilled in the art.

The gas discharge line 9 is provided with a compressor or blower 11 for transport of the gas stream and an automatically regulated air metering unit in the form of a regulating valve 6 via which the air or alternatively another oxygen carrier can be mixed into the ethylene-containing gas stream. The flows in continuous operation are selected so that a stoichiometic amount or a slight excess of oxygen is added, so that virtually complete oxidation of the ethylene takes place. A significant oxygen excess should be avoided in all cases, so that the oxygen concentration in the silo 1 remains reliably below the explosion limit of about 7% by volume of oxygen. Small amounts of ethylene do adversely affect the degassing equilibrium at the bottom of the silo, but have no negative impact on the safety of the plant.

The amount of air added is regulated by measuring the oxygen content of the oxidized gas stream in the gas return line 10 and opening the regulating valve 6 sufficiently far for only a small amount of unconsumed oxygen to leave the catalyst unit 5. The oxygen content can be measured using a customary $\lambda$, probe as is also used in the purification of automobile exhaust gases. As an alternative or in addition thereto, the content of compound to be oxidized, in this case ethylene, can be measured after passage through the catalyst unit 5. This can be carried out using continuous measurement methods, in particular spectroscopic measurement methods such as UV/Vis, IR or Raman spectroscopy, which are sufficiently sensitive and operate selectively, without being restricted thereto.

In the start-up phase of the degassing plant, a constant of amount of ethylene is taken from the silo 1, provided that the ethylene content of the granulated material 2 is constant The gas which has been oxidized with the aid of the catalyst unit 5 contains, apart from small amounts of oxygen of a few % by volume, only inert nitrogen and the oxidation products carbon dioxide and water, which are likewise inert.

The oxidized gas is mostly recirculated via the gas return line 10 to the silo 1 and is once again loaded with

ethylene in the silo 1. In the ideal case, the gas fed to the silo 1 (gas feed stream) consists entirely of recirculated gas, so that no further addition of inert gas is necessary. However, the addition of air and thus oxygen for the oxidation of ethylene continuously increases the amount or pressure of the purge gas, so that the excess is removed from the circuit via the offgas line 12. This is most simply brought about by means of an overpressure valve or a line dipping into liquid (not shown) to keep the pressure in the circuit at a constant, low overpressure of preferably from $10^3$ to $10^5$ Pa. In addition, the oxidized gas stream can be freed of water vapor by means of a water separator 16 which may, if desired, be combined with a cooler. As a result, dry granulated material is not unnecessarily wetted with water or moist granulated material is effectively dewatered. The method of the present invention is thus suitable for the combined removal of residual monomers and drying of the granulated material. Although a water separator located upstream of the catalyst is possible, it is not necessary since any accumulated water vapor in the gas does not interfere with the catalytic oxidation. For efficient energy utilization, thermal coupling of the gas entering the catalyst with the outflowing gas can be provided.

When the degassing plant is started up, it is advantageous for the entire plant, i.e. the silo 1, the catalyst unit 5 and the lines 9, 10, .firstly to be purged with nitrogen or another inert gas so as to remove the oxygen. The compressor 11 is then switched on and the catalyst unit 5 is brought to operating temperature. Loading of the silo 1 and degassing of the granulated material 2 can then commence. The gas discharged from the silo is preferably provided with an excess of oxygen so that a proportion of from 0.1 to 5% by volume of oxygen is present in the total gas flow through the container 1, i.e. after oxidation has occurred. Particular preference is given to setting a content of from 0.5 to 4% by volume, in particular from 1 to 3% by volume, of oxygen. In the case of such an amount of oxygen, the oxygen concentration reliably remains below the explosive limit of about 7% by volume and complete oxidation of the ethylene to carbon dioxide and water is ensured. Since the addition of an excess of oxygen is carried out essentially for kinetic reasons, smaller amounts of oxygen may also be sufficient as long as the reaction rates over the catalyst are sufficiently high to ensure that the conversion during the residence time of the gas in the catalyst unit 5 is sufficient for the ethylene content of the circulating gas downstream of the catalyst unit [lacuna].

A preferred variant provides for the plant, after having been made inert, to be started up initially using a large excess of oxygen, but nevertheless below 7% by volume. This leads initially to an accumulation of oxygen in the plant during the start-up phase until the desired oxygen content has been reached. From this point in time, only stoichiometric amounts of oxygen, i.e. the amount of oxygen which is consumed in the oxidation, are added, so that the oxygen content is maintained at the desired level. The length of the start-up phase depends on the process engineering boundary conditions such as the ethylene content of the polyethylene, the dimensions of the container, the flow through the container, the catalyst, etc., and can be restricted to a few minutes but can also be a number of hours.

Since the oxidized gas stream returned to the silo 1 from the catalyst unit 5 also contains only small amounts of oxygen, there is no risk of forming an explosive mixture at any stage of operation. This also applies in the case of malfunctions of the plant, as long as the gas stream is immediately switched off when an appreciable oxygen concentration occurs downstream of the catalyst unit 5, for example due to failure or malfunction of the catalyst unit 5. Purging with a relatively expensive inert gas is thus only required when starting up the plant, while the purged gas used continuously regenerates itself during operation. Accumulation of carbon dioxide in the purged gas does take place over time, but this has no adverse effects on the degassing process.

The present invention is illustrated with the aid of a preferred embodiment. However, further, additional variants are conceivable. In particular, the method described can be applied in the same way to the degassing of polypropylene, poly-1-butene and other polymers and copolymers of $\alpha$-olefins.

Examples 1 to 3

The following examples relate to a plant for producing polyethylene. The process employs the gas-phase fluidized-bed process known to those skilled in the art, as is described, for example, in EP 475 603 A, EP 089 691 A or EP 571 826 A, and, has a production capacity of about 8 metric tons/h. Degassing with recirculation of monomer is provided downstream of the polymerization reactor, and this removes the main amount of monomer from the polymer. The subsequent granulation in an extruder is also carried out with countercurrent degassing to achieve a further decrease in the monomer content of the granulated material.

The degassing plant of the present invention is installed downstream of the polymerization plant and comprises a customary silo for accommodating granulated material having a diameter of 4 m and a height of 26 m. The granulated polymer degassing plant used is constructed as described above and contains a customary platinum/palladium oxidation catalyst preceded by an air preheater to ensure that the temperature of the gas entering the catalyst is about 300°C. Degassing was carried out in the silo at 60°C. This corresponds to a Henry constant for ethylene of $3.9 \times 10^4$ Pa·t(PE) /kg(ethylene) and a saturation vapor pressure of $3.9 \times 10^4$ Pa at an ethylene loading of the polyethylene granules of 0.1%.

The ethylene content of the granulated material was measured before entry into the silo and after exit from the silo by means of headspace gas chromatography on a sample. In this method, the volatile components are driven from the polymer by heating and are analyzed by chromatography. Furthermore, the ethylene content in the return line after

oxidation was determined by gas chromatography. The mean residence time of the granulated material in the silo was 20 hours in all examples. The pressure drop in the silo was below $2 \times 10^3$ Pa.

Examples 1 and 2 were carried out at a relatively low ethylene loading of the granulated polyethylene, as is typical for a granulated polyethylene after degassing in the extruder of the granulation plant As can be seen from the table below, very low residual monomer contents of about 10 ppm were achieved Virtually complete oxidation of the ethylene is achieved in the oxidation catalyst.

In Example 3, no degassing was carried out in the extruder used for granulation, which led to an increase in the ethylene content in the granulated material to above 0.3% by weight In this case, 1000 kg/h of the oxidized gas stream were recirculated via the second circulation line to dilute the gas flowing into the catalyst so as to reduce the temperature rise in the catalyst. Here too, virtually complete degassing was able to be achieved.

As can be seen from the table below, virtually complete oxidation of the ethylene in the catalyst unit is also possible in this example. The residual ethylene content of the granulated material which has been treated by the method of the present invention is sufficiently low. Explosion protection for the silo can be omitted.

Comparative example

For comparison, degassing was carried out in a conventional manner using air, with the same polymerization plant and the same silo as in Examples 1 to 3 being employed. However, the air was blown directly into the silo without pretreatment and the ethylene taken up was catalytically oxidized after exit from the silo. Recirculation of gas after oxidation of the ethylene did not take place.

The measured values obtained after establishment of the degassing equilibrium are reported in the following table for Examples 1 to 3 and the comparative example C1.

| Example | Throughput of PE [t/h] | Compressor output [$m^3$/h] | Ethylene content of granulated material upstream of silo [ppm] | Ethylene content of granulated material downstream of [ppm] | Residual ethylene content after oxidation [ppm] | Oxygen content after oxidation [% by weight] |
|---|---|---|---|---|---|---|
| C1 | 8.3 | 1650 | 1750 | 10 | - | - |
| 1 | 8.3 | 1530 | 1570 | 8 | 17 | 1.9 |
| 2 | 8.4 | 1550 | 1780 | 10 | 20 | 2.0 |
| 3 | 8.3 | 1 550 | 3 220 | 11 | 21 | 2.0 |

## Claims

1. A method of safely removing one or more volatile oxidizable compounds which can form an explosive mixture with oxygen from particles (2) present in a container (1), in which a gas stream is introduced into the container (1), the gas stream takes up the oxidizable compounds from the particles (2) and a gas stream laden with the oxidizable compounds is discharged from the container (1),
wherein

   - oxygen is added to the gas stream which has been discharged and the oxidizable compounds present in the discharged gas stream are at least pardy catalytically oxidized by means of the oxygen and
   - the oxidized gas stream forms at least part of the gas stream introduced into the container (1), so that the gas stream is circulated.

2. A method as claimed in claim 1, wherein the particles are polymer particles (2) and the volatile oxidizable compounds are residual monomers and/or solvents remaining in the polymer particles (2) after they have been produced.

3. A method as claimed in claim 2, wherein the polymer particles are solid polymer granules (2), in particular polyolefin granules.

4. A method as claimed in claim 2, wherein the particles are sprayed liquid or wax-like polymer particles.

**5.** A method as claimed in any of the preceding claims, wherein the oxygen is added to the oxidizable compounds in an essentially stoichiometric amount corresponding to that required for complete oxidation.

**6.** A method as claimed in any of the preceding claims, wherein the oxygen is added in the form of air.

**7.** A method as claimed in claim 6, wherein the amount of added oxygen is regulated on the basis of the content of oxygen and/or the oxidizable compound measured In the oxidized gas stream.

**8.** A method as claimed in any of the preceding claims, wherein the oxidation is carried out with the aid of a catalyst whose active component comprises at least one noble metal selected from the group consisting of platinum, palladium and rhodium.

**9.** A method as claimed in any of the preceding claims, wherein the particles (2) are continuously introduced into the container (1) and discharged from the container (1).

**10.** A method as claimed in claim 8, wherein the gas stream is conveyed in countercurrent to the particles (2).

**11.** A method as claimed in any of the preceding claims having a preceding start-up phase in which the circuit is purged with an inert gas, in particular nitrogen.

**12.** A method as claimed in claim 11, wherein the oxygen content in the container (1) is increased continuously to a level of from 0.5 to 5% by volume, in particular from 1 to 4% by volume, during the start-up phase and is subsequently kept constant

**13.** An apparatus for implementing the method as claimed in any of the preceding claims, comprising

- a container (1) for accommodating the polymer particles (2) having a gas inlet (3) and a gas outlet (4),
- a catalyst unit (5) containing an oxidation catalyst for oxidizing the residual monomer by means of oxygen,
- a gas circulation line comprising a gas outlet line (9) which connects the gas outlet (4) to the catalyst unit (5) and a return line (10) which connects the catalyst unit (5) to the gas inlet (3) and
- an air metering unit (6) connected to the gas outlet line (9) for introducing oxygen into the gas outlet line (9).

**14.** An apparatus as claimed in claim 13 comprising a polymer particle inlet (6) and a polymer particle outlet (7), where the polymer particle inlet (6) and the gas inlet (3) are located on one side of the container (1) and the polymer particle outlet (7) and the gas outlet (4) are located on an opposite side of the container (1) so that the gas stream and the polymer particles (2) can be conveyed in countercurrent.

**15.** An apparatus as claimed in claim 13 or 14, wherein the container is a silo (1) for the storage of granulated polymer (2).

**16.** An apparatus as claimed in any of claims 13 to 15, wherein the oxidation catalyst comprises a bundle of conventional monolithic three-way or oxidation catalysts for automobile exhaust gas purification.

**17.** An apparatus as claimed in any of claims 13 to 16, wherein the catalyst unit (5) can be operated autothermally.

**18.** An apparatus as claimed in any of claims 13 to 17, which further comprises

- a lambda probe for measuring the oxygen content in the return line (10) and
- a regulating unit which regulates the amount of oxygen introduced through the metering unit (6) on the basis of the oxygen content measured by means of the lambda probe.

## Patentansprüche

**1.** Verfahren zur sicheren Entfernung einer oder mehrerer flüchtiger oxidierbarer Verbindungen, die mit Sauerstoff ein explosives Gemisch bilden können, aus in einem Behälter (1) befindlichen Partikeln (2), wobei dem Behälter (1) ein Gasstrom zugeführt wird, der Gasstrom von den Partikeln (2) die oxidierbaren Verbindungen aufnimmt und ein mit den oxidierbaren Verbindungen beladener Gasstrom von dem Behälter (1) abgeführt wird,
wobei

- dem abgeführte Gasstrom Sauerstoff zugesetzt wird und die im abgeführten Gasstrom enthaltenen oxidierbaren Verbindungen mit dem Sauerstoff zumindest zum Teil katalytisch oxidiert werden und
- der oxidierte Gasstrom zumindest zum Teil den dem Behälter (1) zugeführten Gasstrom bildet, so dass der Gasstrom in einem Kreislauf geführt wird.

**2.** Verfahren nach Anspruch 1, wobei es sich bei den Partikeln um Polymerpartikel (2) und bei den flüchtigen oxidierbaren Verbindungen um bei der Produktion in den Polymerpartikeln (2) verbliebene Restmonomere und/oder Lösungsmittel handelt.

**3.** Verfahren nach Anspruch 2, wobei es sich bei den Polymerpartikeln um feste Polymergranulate (2), insbesondere Polyolefingranulate handelt.

**4.** Verfahren nach Anspruch 2, wobei es sich um versprühte flüssige oder wachsartige Polymerpartikel handelt.

**5.** Verfahren nach einem der vorangehenden Ansprüche, wobei der Sauerstoff den oxidierbaren Verbindungen in einer im wesentlichen stöchiometrischen Menge, die zur vollständigen Oxidation notwendig ist, zugegeben wird.

**6.** Verfahren nach einem der vorangehenden Ansprüche, wobei der Sauerstoff in Form von Luft zugegeben wird.

**7.** Verfahren nach Anspruch 6, wobei die Menge des zugegebenen Sauerstoffs in Abhängigkeit vom im oxidierten Gasstrom gemessenen Gehalt an Sauerstoff und/oder an der oxidierbaren Verbindung geregelt wird.

**8.** Verfahren nach einem der vorangehenden Ansprüche, wobei die Oxidation mit Hilfe eines Katalysators erfolgt, der als aktive Komponente mindestens eines der Edelmetalle aufweist ausgewählt aus der Gruppe bestehend aus Platin, Palladium und Rhodium.

**9.** Verfahren nach einem der vorangehenden Ansprüche, wobei die Partikel (2) kontinuierlich in den Behälter (1) ein- und aus dem Behälter (1) ausgetragen werden.

**10.** Verfahren nach Anspruch 8, wobei der Gasstrom im Gegenstrom zu den Partikeln (2) geführt wird.

**11.** Verfahren nach einem der vorangehenden Ansprüche mit einer vorgelagerten Anfahrphase, in der der Kreislauf mit einem inerten Gas, insbesondere Stickstoff, gespült wird.

**12.** Verfahren nach Anspruch 11, wobei in der Anfahrphase der Sauerstoffgehalt im Behälter (1) kontinuierlich auf ein Niveau von 0,5 bis 5 Vol.%, insbesondere 1 bis 4 Vol.%, erhöht wird und anschließend konstant gehalten wird.

**13.** Vorrichtung zur Durchführung des Verfahrens nach einem der vorangehenden Ansprüche umfassend

- einen Behälter (1) zur Aufnahme der Polymerpartikel (2) mit einem Gaseinlass (3) und einem Gasauslass (4),
- eine Katalysatoreinheit (5) enthaltend einem Oxidationskatalysator zur Oxidation des Restmonomeren mit Sauerstoff,
- eine Kreisgasführung, die eine Gasablaufleitung (9) aufweist, die den Gasauslass (4) mit der Katalysatoreinheit (5) verbindet, und eine Rücklaufleitung (10) aufweist, die die Katalysatoreinheit (5) mit dem Gaseinlass (3) verbindet und
- eine mit der Gasablaufleitung (9) verbundene Luftdosiereinheit (6) zum Zuführen von Sauerstoff in die Gasablaufleitung (9).

**14.** Vorrichtung nach Anspruch 13, die einen Polymerpartikelzulauf (6) und einen Polymerpartikelablauf (7) aufweist, wobei der Polymerpartikelzulauf (6) und der Gaseinlass (3) auf einer Seite des Behälters (1) und der Polymerpartikelablauf (7) und der Gasauslass (4) auf einer gegenüberliegenden Seite des Behälters (1) angeordnet sind, so dass der Gasstrom und die Polymerpartikel (2) im Gegenstrom führbar sind.

**15.** Vorrichtung nach Anspruch 13 und 14, wobei es sich bei dem Behälter um einen Silo (1) zur Lagerung von Polymergranulat (2) handelt.

**16.** Vorrichtung nach einem der Ansprüche 13 bis 15, wobei es sich bei dem Oxidationskatalysator um ein Bündel herkömmlicher monolithischer 3-Wege- oder Oxidationskatalysatoren für die Autoabgasreinigung handelt.

**17.** Vorrichtung nach einem der Ansprüche 13 bis 16, wobei die Katalysatoreinheit (5) autotherm betreibbar ist.

**18.** Vorrichtung nach einem der Ansprüche 13 bis 17, die weiterhin umfasst

- eine Lambda-Sonde zur Messung des Sauerstoffgehaltes in der Rücklaufleitung (10) und
- eine Regeleinheit, die die Menge des durch die Dosiereinheit (6) zugeführten Sauerstoffs in Abhängigkeit von dem mittels der Lambda-Sonde gemessenen Sauerstoffgehalt regelt.

## Revendications

**1.** Procédé pour supprimer de manière sûre un ou plusieurs composés volatiles oxydables qui peuvent former un mélange explosif avec de l'oxygène à partir de particules (2) présentes dans un récipient (1), dans lequel un courant gazeux est introduit dans le récipient (1), le courant gazeux prenant les composés oxydables des particules (2) et un courant gazeux chargé avec les composés oxydables étant déchargé du récipient (1),
dans lequel

- de l'oxygène est ajouté au courant gazeux qui a été déchargé et les composés oxydables présents dans le courant gazeux déchargé sont au moins partiellement oxydés de manière catalytique au moyen de l'oxygène et
- le courant gazeux oxydé forme au moins une partie du courant gazeux introduit dans le récipient (1), de sorte que le courant gazeux est en circulation.

**2.** Procédé selon la revendication 1, dans lequel les particules sont des particules de polymères (2) et les composés oxydables volatiles sont des monomères résiduels et/ou des solvants restant dans les particules de polymères (2) après qu'elles aient été produites.

**3.** Procédé selon la revendication 2, dans lequel les particules de polymères sont des granules de polymères solides (2), en particulier des granules de polyoléfine.

**4.** Procédé selon la revendication 2, dans lequel les particules sont des particules de polymère liquide vaporisé ou des particules de polymère de type cire.

**5.** Procédé selon l'une quelconque des revendications précédentes, dans lequel l'oxygène est ajouté aux composés oxydables en quantité essentiellement stoechiométrique correspondant à ce qui est nécessaire pour une oxydation totale.

**6.** Procédé selon l'une quelconque des revendications précédentes, dans lequel l'oxygène est ajouté sous forme d'air.

**7.** Procédé selon la revendication 6, dans lequel la quantité d'oxygène ajoutée est régulée sur la base de la teneur en oxygène et/ou du composé oxydable mesuré dans le courant gazeux oxydé.

**8.** Procédé selon l'une quelconque des revendications précédentes, dans lequel l'oxydation est réalisée à l'aide d'un catalyseur dont le composant actif comprend au moins un métal noble choisi parmi le groupe constitué du platine, du palladium et du rhodium.

**9.** Procédé selon l'une quelconque des revendications précédentes, dans lequel les particules (2) sont introduites de manière continue dans le récipient (1) et déchargées du récipient (1).

**10.** Procédé selon la revendication 8, dans lequel le courant gazeux est acheminé à contre-courant des particules (2).

**11.** Procédé selon l'une quelconque des revendications précédentes ayant une phase de mise en route précédente dans laquelle le circuit est purgé avec un gaz inerte, en particulier de l'azote.

**12.** Procédé selon la revendication 11, dans lequel la teneur en oxygène dans le récipient (1) est augmentée de manière continuelle jusqu'à un niveau de 0,5 à 5% en volume, en particulier de 1 à 4% en volume, pendant la phase de mise en route et est ensuite gardée constante.

**13.** Dispositif pour mettre en oeuvre le procédé tel que revendiqué dans l'une quelconque des revendications précédentes, comprenant

- un récipient (1) pour recevoir les particules de polymère (2) ayant une arrivée de gaz (3) et une sortie de gaz (4),
- une unité de catalyseur (5) contenant un catalyseur d'oxydation pour oxyder le monomère résiduel à l'aide d'oxygène,
- une conduite de circulation de gaz comprenant une conduite de sortie de gaz (9) qui connecte la sortie de gaz (4) à l'unité de catalyseur (5) et une conduite de retour (10) qui connecte l'unité de catalyseur (5) à l'arrivée de gaz (3) et
- une unité de dosage d'air (6) connectée à la conduite de sortie de gaz (9) pour introduire l'oxygène dans la conduite de sortie de gaz (9).

**14.** Dispositif selon la revendication 13 comprenant une arrivée de particules de polymère (6) et une sortie de particules de polymère (7), où l'arrivée de particules de polymère (6) et la conduite de gaz (3) sont situées sur un côté du récipient (1) et la sortie de particules de polymère (7) et la sortie de gaz (4) sont situées sur un côté opposé du récipient (1) de sorte que le courant gazeux et les particules de polymère (2) puissent être acheminées à contre-courant.

**15.** Dispositif selon la revendication 13 ou 14, dans lequel le récipient est un silo (1) pour le stockage de polymère en granulé (2).

**16.** Dispositif selon l'une quelconque des revendications 13 à 15, dans lequel le catalyseur d'oxydation comprend un paquet de catalyseurs monolithiques trifonctionnel ou de catalyseurs d'oxydation classiques pour la purification de gaz d'échappement automobiles.

**17.** Dispositif selon l'une quelconque des revendications 13 à 16, dans lequel l'unité de catalyseur (5) peut être actionnée de manière autotherme.

**18.** Dispositif selon l'une quelconque des revendications 13 à 17, qui comprend en outre

- une sonde lambda pour mesurer la teneur en oxygène dans la conduite de retour (10) et
- une unité de régulation qui régule la quantité d'oxygène introduite au travers de l'unité de dosage (6) sur la base de la teneur en oxygène mesurée au moyen de la sonde lambda.

Fig. 1

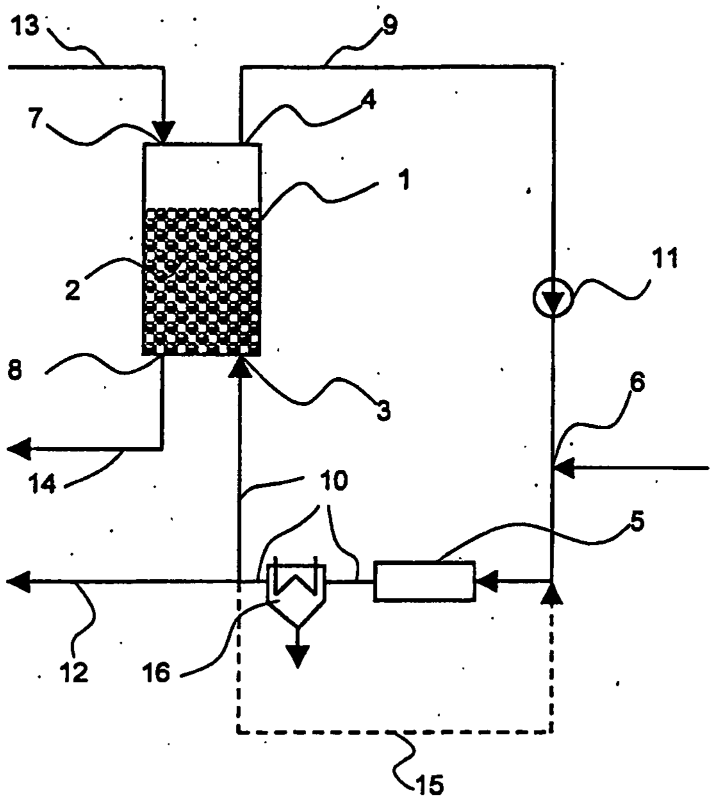

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4372758 A
- DE 4436046 A1
- EP 475603 A
- EP 089691 A
- EP 571826 A


### Non-patent literature cited in the description


- **BERET et al.** Purging criteria for LDPE make bins. *Chem. Ing. Progr.,* vol. 73, 44-49